# EUROPÄISCHE PATENTSCHRIFT

(11) **EP 3 882 573 B1**
(45) Veröffentlichungstag und Bekanntmachung des Hinweises auf die Patenterteilung: **06.12.2023**
(21) Anmeldenummer: 20163436.7
(22) Anmeldetag: 16.03.2020
(51) Int. Cl.: G01C 21/20, G01C 21/34, G01C 21/36, G01C 23/00

(54) **ANPASSUNG EINES ALGORITHMUS IN EINEM FORTBEWEGUNGSMITTEL**
ADAPTATION OF AN ALGORITHM IN A MEANS OF TRANSPORT
AJUSTEMENT D'UN ALGORITHME DANS UN MOYEN DE DÉPLACEMENT

(43) Veröffentlichungstag der Anmeldung: 22.09.2021
(73) Patentinhaber: Elektrobit Automotive GmbH, 91058 Erlangen (DE)
(72) Erfinder: Patino Studencki, Lucila, 65824 Schwalbach a. Ts. (DE); Kraus, Manuel, 65824 Schwalbach a. Ts. (DE); Pfeuffer, Christian, 65824 Schwalbach a. Ts. (DE); Siller, Christian, 65824 Schwalbach a. Ts. (DE); Schauer, Martin, 65824 Schwalbach a. Ts. (DE); Nippe, Martin, 65824 Schwalbach a. Ts. (DE); Baleghkalam, Ghazaleh, 65824 Schwalbach a. Ts. (DE); Ohl, Sebastian, 65824 Schwalbach a. Ts. (DE)
(74) Vertreter: Continental Corporation

(56) Entgegenhaltungen:
- US-A1- 2018 238 709
- US-A1- 2019 152 744

## Beschreibung

Die vorliegende Erfindung betrifft ein Verfahren, ein Computerprogramm mit Instruktionen und eine Vorrichtung zum Anpassen eines Algorithmus in einem Fortbewegungsm ittel.

In Fortbewegungsmitteln eingesetzte Schätzverfahren nutzen entweder feste Konfigurationsparameter oder eine dynamische Schätzung von bestimmten Parametern anhand von Messdaten. Feste Konfigurationsparameter liefern nur bei durchschnittlichen Bedingungen optimale Schätzungen. Im Falle von großen Abweichungen, z.B. Abweichungen des Messrauschens, werden auch die Schätzungen große Abweichungen oder sogar Divergenzen zeigen. Dynamische Schätzungen der Parameter leiden unter falschen Interpretationen von dynamischen Effekten. Beispielsweise können Fahrzeugbeschleunigungen unter der gleichzeitigen Annahme einer konstanten Geschwindigkeit als Rauschen fehlinterpretiert werden. Dies kann zur Überschätzung oder Unterschätzung der Dynamik führen.

Um derartige Probleme zu vermeiden, werden die Parameter üblicherweise mit sehr konservativen oder durchschnittlichen Werten eingestellt, was allerdings keine optimale Schätzung erlaubt. Algorithmen können zudem in unstabile Zustände hineinlaufen (z.B. Filterdivergenz) und müssen daraufhin neu gestartet werden. Dies führt aber zu einer Verringerung der Verfügbarkeit der Schätzung.

Ein weiterer Ansatz für den Umgang mit potenziell fehlerbehafteten Eingangsgrößen besteht darin, die Qualität der Eingangsgrößen zu erfassen und zu berücksichtigen.

In diesem Zusammenhang beschreibt WO 2018/151844 A1 ein Navigationssystem für ein Flugzeug oder ein Kraftfahrzeug, das eingerichtet ist, die Qualität und Integrität von Quelleninformationen zu bestimmen. Das Navigationssystem umfasst eine Datenquelle, die die Quelleninformationen bereitstellt, und ein Situationsmodul, das Situationsdaten liefert. Ein Informationsmodul bestimmt auf der Grundlage der Quelleninformationen und der Situationsdaten eine Schätzung der Qualität und eine Schätzung der Integrität der Quelleninformationen. Ein Integritätsüberwachungsmodul bestimmt auf der Grundlage der Schätzung der Qualität und der Schätzung der Integrität der Quelleninformationen aus dem Informationsmodul die Integrität und die Qualität der Quelleninformationen und validiert die Quelleninformationen auf der Grundlage der Integrität der Quelleninformationen oder der Qualität der Quelleninformationen. Ein Navigationszustandsschätzer bestimmt Navigationsinformationen auf der Grundlage der validierten Quelleninformationen und der entsprechenden Qualität der vom Integritätsüberwachungsmodul erhaltenen Quelleninformationen.

US 2019/0152744 A1 beschreibt ein Verfahren zum Bestimmen eines Zustands eines Systems zum Transport von Passagieren. Bei dem Verfahren werden Zustandsdaten des Systems und Umgebungsdaten des Systems empfangen. Die Zustandsdaten werden dabei von einem Zustandssensor erzeugt, der zum Erfassen physikalischer Zustände einer Ausrüstung des Systems angepasst ist. Die Umgebungsdaten enthalten Informationen über einen Einfluss einer Umgebung des Systems auf die Ausrüstung und/oder den Zustandssensor. Die Zustandsdaten werden mit den Umgebungsdaten gewichtet. Auf der Grundlage der gewichteten Zustandsdaten wird ein Zustand der Ausrüstung bestimmt.

Es ist eine Aufgabe der vorliegenden Erfindung, Lösungen für eine verbesserte Anpassung eines Algorithmus in einem Fortbewegungsmittel bereitzustellen.

Diese Aufgabe wird durch ein Verfahren mit den Merkmalen des Anspruchs 1, durch ein Computerprogramm mit Instruktionen mit den Merkmalen des Anspruchs 6 und durch eine Vorrichtung mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zum Anpassen eines Algorithmus zur Verarbeitung von Messdaten zumindest eines Sensors in einem Fortbewegungsmittel, wobei der Algorithmus ein Schätzverfahren zur Verarbeitung der Messdaten implementiert, das zumindest ein dynamisches Modell und zumindest ein Messmodell nutzt, wobei das zumindest eine dynamische Modell eine bestimmte Bewegung des Fortbewegungsmittels darstellt und das zumindest eine Messmodell Annahmen an die Natur von Sensorfehlern darstellt, und wobei das zumindest eine dynamische Modell und das zumindest eine Messmodell eine Gewichtung der Messdaten bestimmen, die Schritte:
- Empfangen von mit Ortsinformationen versehenen Informationen zu Umgebungsbedingungen von einer externen Quelle;
- Auswerten der Informationen zu Umgebungsbedingungen in Hinblick darauf, ob der zumindest eine Sensor in einem bestimmten Bereich fehlerhafte Messdaten liefern könnte; und
- vorausschauendes Anpassen des zumindest einen dynamischen Modells oder des zumindest einen Messmodells für den Bereich, in dem der zumindest eine Sensor fehlerhafte Messdaten liefern könnte.

Gemäß einem weiteren Aspekt der Erfindung umfasst ein Computerprogramm Instruktionen, die bei Ausführung durch einen Computer den Computer zur Ausführung der folgenden Schritte zum Anpassen eines Algorithmus zur Verarbeitung von Messdaten zumindest eines Sensors in einem Fortbewegungsmittel veranlassen, wobei der Algorithmus ein Schätzverfahren zur Verarbeitung der Messdaten implementiert, das zumindest ein dynamisches Modell und zumindest ein Messmodell nutzt, wobei das zumindest eine dynamische Modell eine bestimmte Bewegung des Fortbewegungsmittels darstellt und das zumindest eine Messmodell Annahmen an die Natur von Sensorfehlern darstellt, und wobei das zumindest eine dynamische Modell und das zumindest eine Messmodell eine Gewichtung der Messdaten bestimmen:
- Empfangen von mit Ortsinformationen versehenen Informationen zu Umgebungsbedingungen von einer externen Quelle;
- Auswerten der Informationen zu Umgebungsbedingungen in Hinblick darauf, ob der zumindest eine Sensor in einem bestimmten Bereich fehlerhafte Messdaten liefern könnte; und
- vorausschauendes Anpassen des zumindest einen dynamischen Modells oder des zumindest einen Messmodells für den Bereich, in dem der zumindest eine Sensor fehlerhafte Messdaten liefern könnten.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Anpassen eines Algorithmus zur Verarbeitung von Messdaten zumindest eines Sensors in einem Fortbewegungsmittel, wobei der Algorithmus ein Schätzverfahren zur Verarbeitung der Messdaten implementiert, das zumindest ein dynamisches Modell und zumindest ein Messmodell nutzt, wobei das zumindest eine dynamische Modell eine bestimmte Bewegung des Fortbewegungsmittels darstellt und das zumindest eine Messmodell Annahmen an die Natur von Sensorfehlern darstellt, und wobei das zumindest eine dynamische Modell und das zumindest eine Messmodell eine Gewichtung der Messdaten bestimmen, auf:
- ein Empfangsmodul zum Empfangen von mit Ortsinformationen versehenen Informationen zu Umgebungsbedingungen von einer externen Quelle;
- ein Auswertemodul zum Auswerten der Informationen zu Umgebungsbedingungen in Hinblick darauf, ob der zumindest eine Sensor in einem bestimmten Bereich fehlerhafte Messdaten liefern könnte; und
- ein Steuerungsmodul zum vorausschauenden Anpassen des zumindest einen dynamischen Modells oder des zumindest einen Messmodells für den Bereich, in dem der zumindest eine Sensor fehlerhafte Messdaten liefern könnte.

Bei der erfindungsgemäßen Lösung werden zusätzliche Informationen zu Umgebungsbedingungen aus zumindest einer externen Quelle eingebunden. Das Fortbewegungsmittel nimmt diese Informationen entgegen und liefert sie über eine geeignete Schnittstelle an zumindest einen Algorithmus, um diesen je nach Fahrsituationen und Umgebungsbedingungen automatisch optimal anzupassen. Dies führt zu einer Erhöhung der Genauigkeit und Verfügbarkeit der Schätzungen durch eine vorausschauende Parametrisierung. Zwar benötigt das Fortbewegungsmittel für den Empfang der Informationen eine Kommunikationseinrichtung, diese ist in aktuellen Fortbewegungsmitteln aber zunehmend bereits serienmäßig vorhanden, sodass keine zusätzlichen Kosten entstehen.

Gemäß der Erfindung sind die Informationen zu Umgebungsbedingungen mit Ortsinformationen versehen. Die Ortsinformationen erlauben es, die relevanten Umgebungsbedingungen ortskorrekt für die Anpassung des Algorithmus zu berücksichtigen. Da die Verarbeitung der empfangenen Informationen und gegebenenfalls auch die Anpassung des Algorithmus eine gewisse Zeit in Anspruch nimmt, können auf Grundlage der Ortsinformationen rechtzeitig die notwendigen Maßnahmen angestoßen werden. Auf diese Weise ist sichergestellt, dass die Anpassung des Algorithmus abgeschlossen ist, wenn das Fortbewegungsmittel den jeweiligen Ort erreicht. Die Ortsinformation kann beispielsweise in Form einer absolut globalen Angabe eines Ortes oder Bereichs vorliegen. Alternativ kann sie auch als relative Angabe eines Ortes oder Bereichs in Bezug auf eine Verkehrsinfrastruktur vorliegen, z.B. in Bezug auf die Kilometrierung eines Verkehrsweges. Weitere Möglichkeiten für die Bereitstellung der Ortsinformationen liegen im Ermessen des Fachmanns.

Gemäß einem Aspekt der Erfindung ist die externe Quelle ein anderes Fortbewegungsmittel oder ein Backend. Fortbewegungsmittel, z.B. Kraftfahrzeuge, sind bereits heute in der Lage, Informationen mit anderen Fortbewegungsmitteln in der näheren Umgebung oder mit einem Backend bzw. einer Cloud auszutauschen. Bisher wurde der Informationsaustausch hauptsächlich dafür verwendet, um die Sicherheit auf der Straße zu erhöhen, z.B. durch Meldungen zu Störungen, die von anderen Verkehrsteilnehmern verursacht wurden, oder um den Verkehrsfluss zu optimieren. Im Rahmen der erfindungsgemäßen Lösung sammeln die Fortbewegungsmittel während der Fahrt nun auch Informationen zu Umgebungsbedingungen und übertragen diese Informationen an Fortbewegungsmittel in ihrer näheren Umgebung. Alternativ oder zusätzlich können die Informationen auch an ein Backend oder eine Cloud übermittelt werden, von wo aus sie an andere Fortbewegungsmittel weitergegeben werden. Im Falle von Kraftfahrzeugen erfolgt der Informationsaustausch vorzugsweise mittels gängiger Technologien der Car2X-Kommunikation.

Gemäß der Erfindung implementiert der Algorithmus ein Schätzverfahren zur Verarbeitung von Messdaten. Für die Verarbeitung von Messdaten werden oftmals Schätzverfahren eingesetzt, z.B. für die Positionsbestimmung. Hier bietet sich der Einsatz der erfindungsgemäßen Lösungen besonders an, da Sensordaten, die aufgrund der Umgebungsbedingungen fehlerhaft sind, schnell zu suboptimalen Schätzungen oder sogar zu Divergenzen führen.

Gemäß der Erfindung wird zum Anpassen des Algorithmus an die Umgebungsbedingungen ein dynamisches Modell des Algorithmus geändert oder es werden Konfigurationsparameter des Algorithmus angepasst. Schätzverfahren beinhalten dynamische Modelle, die eine oder mehrere bestimmte Bewegungen des Fortbewegungsmittels darstellen, und Messmodelle, die Annahmen an die Natur der Sensorfehler darstellen, wie z.B. Messrauschen. Diese beiden Modelle bestimmen die Gewichtung der Sensordaten. Diese Bestimmung erfolgt normalerweise entweder statisch oder durch online-Abschätzungen. Durch das Hinzufügen von Umgebungsinformationen können diese Modelle entsprechend angepasst werden, beziehungsweise können Freiheitsgrade der Algorithmen hinzugefügt oder reduziert werden.

Gemäß einem Aspekt der Erfindung wird ein Messrauschen, ein Prozessrauschen und/oder zumindest eine Bandbreite angepasst oder es werden Daten zumindest eines Sensors von einer Verarbeitung durch den Algorithmus ausgeschlossen. Das Messrauschen, das Prozessrauschen und die Bandbreiten stellen für die Filterung durch ein Schätzfilter wichtige Parameter dar, deren Anpassung besonders vorteilhaft ist, um fehlerhafte Schätzungen zu vermeiden. Zudem können einzelne Sensoren, bei denen aufgrund der Umgebungsbedingungen fehlerhafte Daten zu erwarten sind, komplett aus der Berechnung ausgeschlossen werden.

Gemäß einem Aspekt der Erfindung umfassen die Informationen zu Umgebungsbedingungen Informationen zu klimatischen Bedingungen oder Informationen zu einer Verkehrsinfrastruktur. Beispiele für klimatische Bedingungen sind das Auftreten von Nebel, Schnee oder Starkregen, was zu Einschränkungen bei kamerabasierten Messungen führt. Hier kann beispielsweise in den Algorithmen das Messrauschen der Kameramessungen verändert werden, sodass diese Informationen weniger zur Schätzung beitragen. Ebenso kann die Kamera umkonfiguriert werden oder eine Entzerrung des Kamerabildes durchgeführt werden. Beispiele für Informationen zu einer Verkehrsinfrastruktur sind das Auftreten von Glatteis auf der Fahrbahn oder ein schlechter Zustand der Fahrbahn. Beispielsweise besteht im Falle von Glatteis Rutschgefahr. Das Fortbewegungsmittel unterlässt daher vorzugsweise die Nutzung von Odometer-Signalen für die Positionsschätzung oder reduziert zumindest deren Gewichtung. Eine Fahrbahn in einem schlechten Zustand fügt zusätzliche Störungen hinzu, z.B. in einem Beschleunigungssensor, dessen Ausgänge zur Positionsschätzung verwendet werden. In Reaktion auf den schlechten Zustand der Fahrbahn kann die Positionsschätzung daher die Daten des Beschleunigungssensors mit einer erhöhten Unsicherheit versehen, sodass diese weniger zur Schätzung beitragen.

Gemäß einem Aspekt der Erfindung fragt das Fortbewegungsmittel die Informationen zu Umgebungsbedingungen von der externen Quelle an. Die Informationen zu Umgebungsbedingungen können zwar auch automatisiert an die Fortbewegungsmittel gesendet werden, vorzugsweise werden sie aber aktiv von Fortbewegungsmitteln angefragt, die diese benötigen. Die Übermittlung der Informationen auf Anfrage reduziert somit das insgesamt zu übermittelnde Datenvolumen.

Vorzugsweise wird ein erfindungsgemäßes Verfahren oder eine erfindungsgemäße Vorrichtung in einem Fortbewegungsmittel eingesetzt, z.B. in einem teilautonomen, autonomen oder mit zumindest einem Assistenzsystem ausgestatteten Kraftfahrzeug oder Luftfahrzeug. Insbesondere im Falle von Kraftfahrzeugen bietet sich eine Nutzung der erfindungsgemäßen Lösung an, da aufgrund der großen Anzahl an Verkehrsteilnehmern umfangreiche Informationen zu Umgebungsbedingungen verfügbar gemacht werden können.

Weitere Merkmale der vorliegenden Erfindung werden aus der nachfolgenden Beschreibung und den angehängten Ansprüchen in Verbindung mit den Figuren ersichtlich.

Figurenübersicht
- Fig. 1: zeigt schematisch ein Verfahren zum Anpassen eines Algorithmus in einem Fortbewegungsmittel;
- Fig. 2: zeigt schematisch eine erste Ausführungsform einer Vorrichtung zum Anpassen eines Algorithmus in einem Fortbewegungsmittel;
- Fig. 3: zeigt schematisch eine zweite Ausführungsform einer Vorrichtung zum Anpassen eines Algorithmus in einem Fortbewegungsmittel;
- Fig. 4: zeigt schematisch ein Fortbewegungsmittel, in dem eine erfindungsgemäße Lösung realisiert ist;
- Fig. 5: zeigt schematisch den Austausch von Informationen zu Umgebungsbedingungen zwischen zwei Fortbewegungsmitteln; und
- Fig. 6: zeigt schematisch ein Positionsbestimmungsmodul, in dem eine erfindungsgemäße Lösung realisiert ist.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

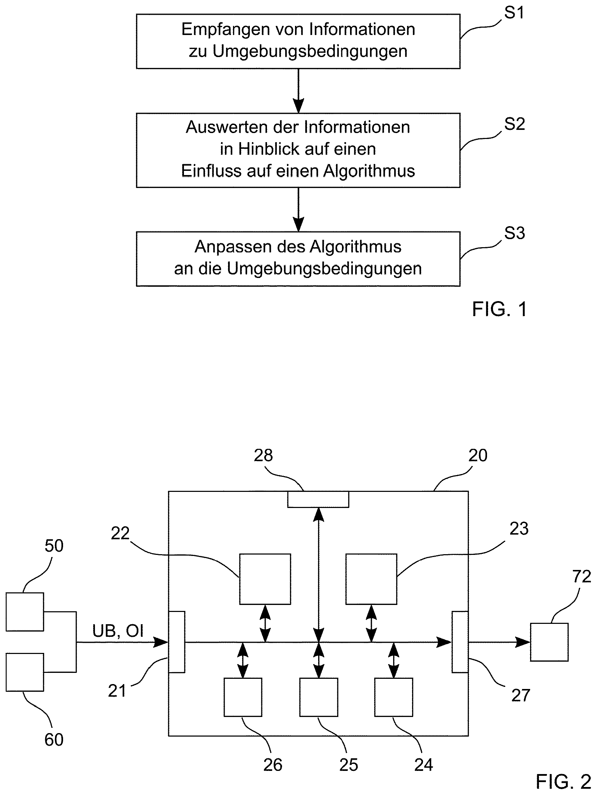

Fig. 1 zeigt schematisch ein Verfahren zum Anpassen eines Algorithmus in einem Fortbewegungsmittel. Der Algorithmus kann beispielsweise ein Schätzverfahren zur Verarbeitung von Messdaten zumindest eines Sensors implementieren. Das Schätzverfahren nutzt zumindest ein dynamisches Modell und zumindest ein Messmodell. Das zumindest eine dynamische Modell stellt dabei eine bestimmte Bewegung des Fortbewegungsmittels dar, wohingegen das zumindest eine Messmodell Annahmen an die Natur von Sensorfehlern darstellt. Das zumindest eine dynamische Modell und das zumindest eine Messmodell bestimmen eine Gewichtung der Messdaten. In einem ersten Schritt S1 werden Informationen zu Umgebungsbedingungen von einer externen Quelle empfangen, z.B. von einem anderen Fortbewegungsmittel oder von einem Backend. Dabei kann vorgesehen sein, dass das Fortbewegungsmittel die Informationen von der externen Quelle aktiv anfragt. Die Informationen zu Umgebungsbedingungen, beispielsweise Informationen zu klimatischen Bedingungen oder Informationen zu einer Verkehrsinfrastruktur, sind mit Ortsinformationen versehen. Die empfangenen Informationen werden dann in Hinblick darauf ausgewertet S2, ob der zumindest eine Sensor in einem bestimmten Bereich fehlerhafte Messdaten liefern könnte. Schließlich wird der Algorithmus vorausschauend an die Umgebungsbedingungen angepasst S3, sofern dies erforderlich ist. Dazu wird z.B. das zumindest eine dynamische Modell oder das zumindest eine Messmodell für den Bereich geändert, in dem der zumindest eine Sensor fehlerhafte Messdaten liefern könnte. Beispielsweise können ein Messrauschen, ein Prozessrauschen oder zumindest eine Bandbreite angepasst oder Daten zumindest eines Sensors von einer Verarbeitung durch den Algorithmus ausgeschlossen werden.

Fig. 2 zeigt eine vereinfachte schematische Darstellung einer ersten Ausführungsform einer Vorrichtung 20 zum Anpassen eines Algorithmus in einem Fortbewegungsmittel. Der Algorithmus implementiert ein Schätzverfahren zur Verarbeitung von Messdaten zumindest eines Sensors. Das Schätzverfahren nutzt zumindest ein dynamisches Modell und zumindest ein Messmodell. Das zumindest eine dynamische Modell stellt dabei eine bestimmte Bewegung des Fortbewegungsmittels dar, wohingegen das zumindest eine Messmodell Annahmen an die Natur von Sensorfehlern darstellt. Das zumindest eine dynamische Modell und das zumindest eine Messmodell bestimmen eine

Gewichtung der Messdaten. Die Vorrichtung 20 hat einen Eingang 21, über den ein Empfangsmodul 22 Informationen UB zu Umgebungsbedingungen von zumindest einer externen Quelle 50, 60 empfängt, z.B. von einem anderen Fortbewegungsmittel 50 oder von einem Backend 60. Dabei kann vorgesehen sein, dass das Fortbewegungsmittel die Informationen UB von der externen Quelle 50, 60 aktiv anfragt. Die Informationen UB zu Umgebungsbedingungen, beispielsweise Informationen zu klimatischen Bedingungen oder Informationen zu einer Verkehrsinfrastruktur, sind mit Ortsinformationen OI versehen. Ein Auswertemodul 23 wertet die empfangenen Informationen UB, OI in Hinblick darauf aus, ob der zumindest eine Sensor in einem bestimmten Bereich fehlerhafte Messdaten liefern könnte. Ein Steuerungsmodul 24 dient dazu, den Algorithmus vorausschauend an die Umgebungsbedingungen anzupassen. Dazu kann das Steuerungsmodul 24 z.B. das zumindest eine dynamische Modell oder das zumindest eine Messmodell für den Bereich ändern, in dem der zumindest eine Sensor fehlerhafte Messdaten liefern könnte. Beispielsweise können ein Messrauschen, ein Prozessrauschen oder zumindest eine Bandbreite angepasst oder Daten zumindest eines Sensors von einer Verarbeitung durch den Algorithmus ausgeschlossen werden. Die vom Steuerungsmodul 24 vorgenommenen Anpassungen können über einen Ausgang 27 der Vorrichtung 20 zur Verwendung durch den Algorithmus ausgegeben werden, z.B. an einen Positionsschätzer 72.

Das Empfangsmodul 22, das Auswertemodul 23 und das Steuerungsmodul 24 können von einem Kontrollmodul 25 gesteuert werden. Über eine Benutzerschnittstelle 28 können gegebenenfalls Einstellungen des Empfangsmoduls 22, des Auswertemoduls 23, des Steuerungsmoduls 24 oder des Kontrollmoduls 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Das Empfangsmodul 22, das Auswertemodul 23, das Steuerungsmodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

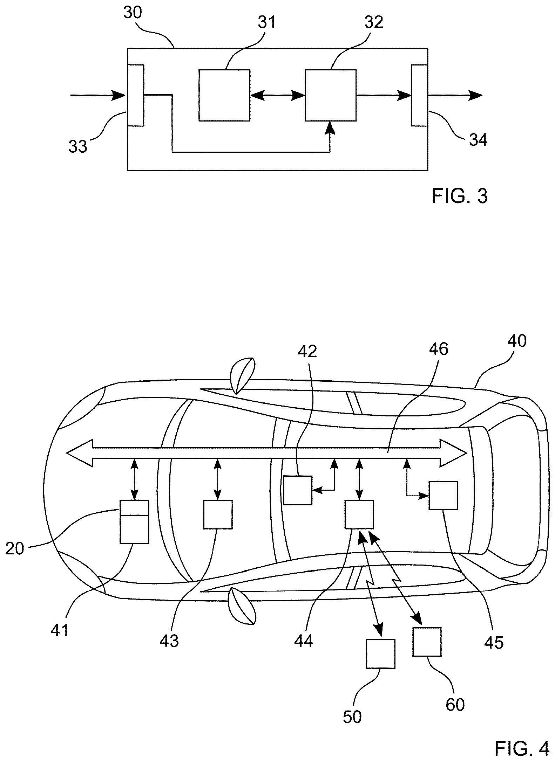

Fig. 3 zeigt eine vereinfachte schematische Darstellung einer zweiten Ausführungsform einer Vorrichtung 30 zum Anpassen eines Algorithmus in einem Fortbewegungsmittel. Die Vorrichtung 30 weist einen Prozessor 32 und einen Speicher 31 auf. Beispielsweise handelt es sich bei der Vorrichtung 30 um ein Steuergerät oder einen Controller. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen zu Umgebungsbedingungen von einer externen Quelle. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug weist zumindest ein Assistenzsystem 41 auf, in dem ein Schätzverfahren zur Verarbeitung von Messdaten läuft. Mit einer Sensorik 42 können Daten zur Fahrzeugumgebung oder zur Fahrzeugbewegung erfasst werden. Die Sensorik 42 kann insbesondere Sensoren zur Umfelderkennung umfassen, z.B. Ultraschallsensoren, Laserscanner, Radarsensoren, Lidarsensoren oder Kameras, sowie Sensoren zur Ermittlung von relativen Bewegungen, z.B. Sensoren für die Odometrie, Gyroskope oder Beschleunigungssensoren, die für eine Koppelnavigation verwendet werden können. Das Kraftfahrzeug weist zudem eine Vorrichtung 20 zum Anpassen eines Algorithmus auf, der das Schätzverfahren des Assistenzsystems 41 implementiert. Die Vorrichtung 20 kann natürlich auch in das Assistenzsystem 41 integriert sein. Weitere Bestandteile des Kraftfahrzeugs sind in diesem Beispiel ein Navigationssystem 43, durch das Positionsinformationen bereitgestellt werden können, sowie eine Datenübertragungseinheit 44. Mittels der Datenübertragungseinheit 44 kann eine Verbindung zu einem Backend 60 oder zu einem anderen Fortbewegungsmittel 50 aufgebaut werden, z.B. um Informationen UB zu Umgebungsbedingungen zu beziehen. Zur Speicherung von Daten ist ein Speicher 45 vorhanden. Der Datenaustausch zwischen den verschiedenen Komponenten des Kraftfahrzeugs erfolgt über ein Netzwerk 46.

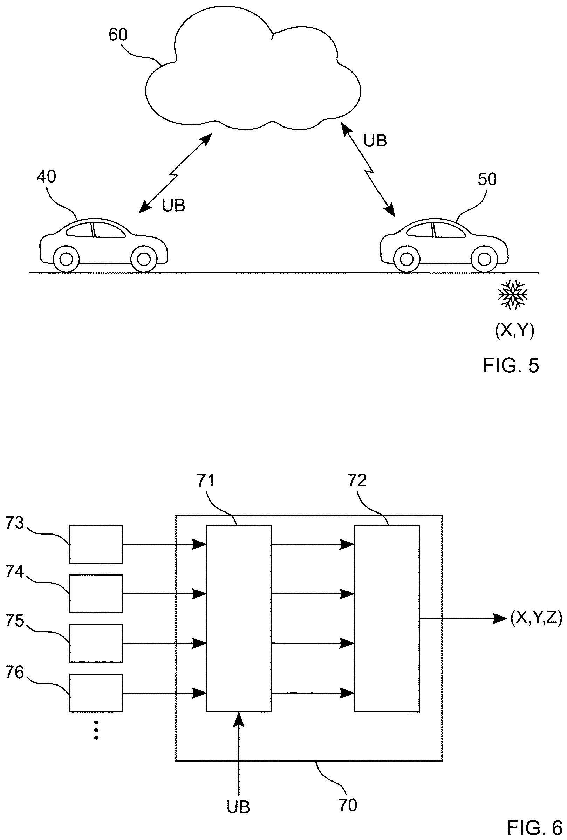

Fig. 5 zeigt schematisch den Austausch von Informationen UB zu Umgebungsbedingungen zwischen zwei Fortbewegungsmitteln 40, 50. Die Fortbewegungsmittel 40, 50 sammeln während der Fahrt fortlaufend Informationen zu Umgebungsbedingungen, z.B. zum Wetter, zum Straßenzustand, etc. Diese Informationen UB werden fortlaufend anderen Fortbewegungsmitteln 40, 50 in der näheren Umgebung zur Verfügung gestellt, entweder direkt mittels Car2Car-Kommunikation oder über ein Backend 60 bzw. eine Cloud. Fortbewegungsmittel 40, 50, die diese Information benötigen, fragen diese an bzw. nehmen diese entgegen und liefern sie über eine geeignete Schnittstelle an die Algorithmik. Die Algorithmen werten diese Information aus und stellen ihre Parameter um, d.h. die Schätzfilter ändern entweder ihre dynamischen Modelle oder andere für die Filterung wichtige Parameter. Beispielsweise können das Messrauschen, das Prozessrauschen oder Bandbreiten angepasst werden oder einzelne Sensoren komplett aus der Berechnung ausgeschlossen werden.

Im dargestellten Beispiel detektiert das vorausfahrende Fortbewegungsmittel 50 Eis auf der Fahrbahn an der Position (X,Y). Diese Information UB übermittelt das Fortbewegungsmittel 50 an das Backend 60, das die Information UB wiederum dem nachfolgenden Fortbewegungsmittel 40 zur Verfügung stellt. Da also Rutschgefahr besteht, reduziert das nachfolgende Fortbewegungsmittel 40 die Gewichtung der Odometer-Signale für die Positionsschätzung in diesem Bereich oder unterlässt die Nutzung der Odometer-Signale für die Positionsschätzung in diesem Bereich vollständig.

Fig. 6 zeigt schematisch ein Positionsbestimmungsmodul 70, in dem eine erfindungsgemäße Lösung realisiert ist. Eine Sensorüberwachung 71 überwacht die Qualität der Signale der Eingangssensoren, in diesem Beispiel Beschleunigungssensoren 73, Gyroskope 74, Sensoren 75 für die Odometrie oder ein GPS-Modul 76 (GPS: Global positioning system; Globales Positionsbestimmungssystem). Wenn eine relevante Umgebungsbedingung UB detektiert wird, z.B. Eis auf der Straße, blockiert oder deaktiviert die Sensorüberwachung 71 die Signale, die aufgrund der Umgebungsbedingung falsche Messungen liefern können, z.B. das Odometer-Signal. Die Sensorüberwachung 71 kann aber auch Charakteristiken des durch einen Positionsschätzer 72 für die Bestimmung der Position (X,Y,Z) genutzten Schätzalgorithmus ändern. Beispielsweise können Annahmen über laterale Bewegungen, die in normalen Fahrsituationen eher klein sind, abgeschwächt werden.

## Patentansprüche

1. Verfahren zum Anpassen eines Algorithmus zur Verarbeitung von Messdaten zumindest eines Sensors (42, 73-76) in einem Fortbewegungsmittel (40), wobei der Algorithmus ein Schätzverfahren zur Verarbeitung der Messdaten implementiert, das zumindest ein dynamisches Modell und zumindest ein Messmodell nutzt, wobei das zumindest eine dynamische Modell eine bestimmte Bewegung des Fortbewegungsmittels (40) darstellt und das zumindest eine Messmodell Annahmen an die Natur von Sensorfehlern darstellt, und wobei das zumindest eine dynamische Modell und das zumindest eine Messmodell eine Gewichtung der Messdaten bestimmen, mit den Schritten:
- Empfangen (S1) von mit Ortsinformationen (OI) versehenen Informationen (UB) zu Umgebungsbedingungen von einer externen Quelle (50, 60);
- Auswerten (S2) der Informationen (UB) zu Umgebungsbedingungen in Hinblick darauf, ob der zumindest eine Sensor (42, 73-76) in einem bestimmten Bereich fehlerhafte Messdaten liefern könnte; und
- vorausschauendes Anpassen (S3) des zumindest einen dynamischen Modells oder des zumindest einen Messmodells für den Bereich, in dem der zumindest eine Sensor (42, 73-76) fehlerhafte Messdaten liefern könnte.

2. Verfahren gemäß Anspruch 1, wobei die externe Quelle (50, 60) ein anderes Fortbewegungsmittel (50) oder ein Backend (60) ist.

3. Verfahren gemäß Anspruch 1 oder 2, wobei ein Messrauschen, ein Prozessrauschen und/oder zumindest eine Bandbreite angepasst wird oder Daten zumindest eines Sensors von einer Verarbeitung durch den Algorithmus ausgeschlossen werden.

4. Verfahren gemäß einem der vorherigen Ansprüche, wobei die Informationen (UB) zu Umgebungsbedingungen Informationen zu klimatischen Bedingungen oder Informationen zu einer Verkehrsinfrastruktur umfassen.

5. Verfahren gemäß einem der vorherigen Ansprüche, wobei das Fortbewegungsmittel (40) die Informationen (UB) zu Umgebungsbedingungen von der externen Quelle (50, 60) anfragt.

6. Computerprogramm mit Instruktionen, die bei Ausführung durch einen Computer den Computer zur Ausführung der Schritte eines Verfahrens gemäß einem der Ansprüche 1 bis 5 zum Anpassen eines Algorithmus zur Verarbeitung von Messdaten zumindest eines Sensors (42, 73-76) in einem Fortbewegungsmittel (40) veranlassen.

7. Vorrichtung (20) zum Anpassen eines Algorithmus zur Verarbeitung von Messdaten zumindest eines Sensors (42, 73-76) in einem Fortbewegungsmittel (40), wobei der Algorithmus ein Schätzverfahren zur Verarbeitung der Messdaten implementiert, das zumindest ein dynamisches Modell und zumindest ein Messmodell nutzt, wobei das zumindest eine dynamische Modell eine bestimmte Bewegung des Fortbewegungsmittels (40) darstellt und das zumindest eine Messmodell Annahmen an die Natur von Sensorfehlern darstellt, und wobei das zumindest eine dynamische Modell und das zumindest eine Messmodell eine Gewichtung der Messdaten bestimmen, mit:
- einem Empfangsmodul (22) zum Empfangen (S1) von mit Ortsinformationen (OI) versehenen Informationen (UB) zu Umgebungsbedingungen von einer externen Quelle (50, 60);
- einem Auswertemodul (23) zum Auswerten (S2) der Informationen (UB) zu Umgebungsbedingungen in Hinblick darauf, ob der zumindest eine Sensor (42, 73-76) in einem bestimmten Bereich fehlerhafte Messdaten liefern könnte; und
- einem Steuerungsmodul (24) zum vorausschauenden Anpassen (S3) des zumindest einen dynamischen Modells oder des zumindest einen Messmodells für den Bereich, in dem der zumindest eine Sensor (42, 73-76) fehlerhafte Messdaten liefern könnte.

## Claims

1. Method for adapting an algorithm for processing measurement data from at least one sensor (42, 73-76) in a means of transport (40), wherein the algorithm implements an estimation method for processing the measurement data, which estimation method uses at least one dynamic model and at least one measurement model, wherein the at least one dynamic model represents a particular movement of the means of transport (40) and the at least one measurement model represents assumptions about the nature of sensor errors, and wherein the at least one dynamic model and the at least one measurement model determine a weighting of the measurement data, having the steps of:
- receiving (S1) information (UB), provided with location information (OI) and relating to environmental conditions, from an external source (50, 60);
- evaluating (S2) the information (UB) relating to environmental conditions with respect to whether the at least one sensor (42, 73-76) could provide erroneous measurement data in a particular region; and
- proactively adapting (S3) the at least one dynamic model or the at least one measurement model for the region in which the at least one sensor (42, 73-76) could provide erroneous measurement data.

2. Method according to Claim 1, wherein the external source (50, 60) is another means of transport (50) or a backend (60).

3. Method according to Claim 1 or 2, wherein measurement noise, process noise and/or at least one bandwidth is adapted or data from at least one sensor are excluded from processing by the algorithm.

4. Method according to one of the preceding claims, wherein the information (UB) relating to environmental conditions comprises information relating to climatic conditions or information relating to a traffic infrastructure.

5. Method according to one of the preceding claims, wherein the means of transport (40) requests the information (UB) relating to environmental conditions from the external source (50, 60).

6. Computer program having instructions which, when executed by a computer, cause the computer to carry out the steps of a method according to one of Claims 1 to 5 for adapting an algorithm for processing measurement data from at least one sensor (42, 73-76) in a means of transport (40).

7. Apparatus (20) for adapting an algorithm for processing measurement data from at least one sensor (42, 73-76) in a means of transport (40), wherein the algorithm implements an estimation method for processing the measurement data, which estimation method uses at least one dynamic model and at least one measurement model, wherein the at least one dynamic model represents a particular movement of the means of transport (40) and the at least one measurement model represents assumptions about the nature of sensor errors, and wherein the at least one dynamic model and the at least one measurement model determine a weighting of the measurement data, having:
- a receiving module (22) for receiving (S1) information (UB), provided with location information (OI) and relating to environmental conditions, from an external source (50, 60);
- an evaluation module (23) for evaluating (S2) the information (UB) relating to environmental conditions with respect to whether the at least one sensor (42, 73-76) could provide erroneous measurement data in a particular region; and
- a control module (24) for proactively adapting (S3) the at least one dynamic model or the at least one measurement model for the region in which the at least one sensor (42, 73-76) could provide erroneous measurement data.

## Revendications

1. Procédé d'adaptation d'un algorithme de traitement de données de mesure d'au moins un capteur (42, 73-76) dans un moyen de transport (40), l'algorithme mettant en oeuvre un procédé d'estimation qui est destiné au traitement des données de mesure et qui utilise au moins un modèle dynamique et au moins un modèle de mesure, l'au moins un modèle dynamique représentant un mouvement déterminé du moyen de transport (40) et l'au moins un modèle de mesure représentant des hypothèses sur la nature d'erreurs de capteurs, et l'au moins un modèle dynamique et l'au moins un modèle de mesure déterminant une pondération des données de mesure, ledit procédé comprenant les étapes suivantes :
- recevoir (S1) d'une source extérieure (50, 60) des informations (UB) dotées d'informations de localisation (OI) et relatives à des conditions environnementales ;
- évaluer (S2) les informations (UB) relatives à des conditions environnementales pour déterminer si l'au moins un capteur (42, 73-76) pourrait fournir des données de mesure incorrectes dans une zone déterminée ; et
- adapter de manière prédictive (S3) l'au moins un modèle dynamique ou l'au moins un modèle de mesure pour la zone dans laquelle l'au moins un capteur (42, 73-76) pourrait fournir des données de mesure incorrectes.

2. Procédé selon la revendication 1, la source extérieure (50, 60) étant un autre moyen de transport (50) ou un dorsal (60).

3. Procédé selon la revendication 1 ou 2, un bruit de mesure, un bruit de processus et/ou au moins une bande passante étant adaptés ou des données d'au moins un capteur étant exclues d'un traitement par l'algorithme.

4. Procédé selon l'une des revendications précédentes, les informations (UB) relatives à des conditions environnementales comprenant des informations relatives à des conditions climatiques ou des informations relatives à une infrastructure de trafic.

5. Procédé selon l'une des revendications précédentes, le moyen de transport (40) demandant les informations (UB) relatives à des conditions environnementales à la source extérieure (50, 60).

6. Logiciel comportant des instructions qui, lorsqu'elles sont exécutées par un ordinateur, permettent à celui-ci d'effectuer les étapes d'un procédé selon l'une des revendications 1 à 5 afin d'adapter un algorithme de traitement de données de mesure d'au moins un capteur (42, 73 -76) dans un moyen de transport (40).

7. Dispositif (20) d'adaptation d'un algorithme de traitement de données de mesure d'au moins un capteur (42, 73-76) dans un moyen de transport (40), l'algorithme mettant en oeuvre un procédé d'estimation qui est destiné au traitement des données de mesure et qui utilise au moins un modèle dynamique et au moins un modèle de mesure, l'au moins un modèle dynamique représentant un mouvement déterminé du moyen de transport (40) et l'au moins un modèle de mesure représentant des hypothèses sur la nature des erreurs de capteurs, et l'au moins un modèle dynamique et l'au moins un modèle de mesure déterminant une pondération des données de mesure, ledit dispositif comprenant :
- un module de réception (22) destiné à recevoir (S1) des informations (UB) dotées d'informations de localisation (OI) et relatives à des conditions environnementales d'une source extérieure (50, 60) ;
- un module d'évaluation (23) destiné à évaluer (S2) les informations (UB) relatives à des conditions environnementales pour déterminer si l'au moins un capteur (42, 73-76) pourrait fournir des données de mesure incorrectes dans une zone déterminée ; et
- un module de commande (24) destiné à adapter de manière prédictive (S3) l'au moins un modèle dynamique ou l'au moins un modèle de mesure pour la zone dans laquelle l'au moins un capteur (42, 73-76) pourrait délivrer des données de mesure incorrectes.
